# EUROPEAN PATENT SPECIFICATION

(11) **EP 1 618 963 B1**
(45) Date of publication and mention of the grant of the patent: **10.12.2008**
(21) Application number: 04254318.1
(22) Date of filing: 19.07.2004
(51) Int. Cl.: B05B 12/08

(54) **Spray gun with adaptable air pressure indication means**
Sprühpistole mit adaptierbaren Luftdruckanzeigemitteln
Pistolet de pulvérisation avec dispositif adaptable d'indication de la pression de l'air

(43) Date of publication of application: 25.01.2006
(73) Proprietor: ANEST IWATA CORPORATION, Yokohama-shi, Kanagawa-ken (JP)
(72) Inventor: Matsumoto, Takuya, c/o Anest Iwata Corporation, Yokohama-shi, Kanagawa-ken (JP); Kaneko, Masaru, c/o Anest Iwata Corporation, Yokohama-shi, Kanagawa-ken (JP)
(74) Representative: Mounteney, Simon James

(56) References cited:
- EP-A- 1 375 013
- FR-A- 2 841 093
- US-B2- 6 585 173

## Description

The present invention relates to a spray gun for use with an air pressure detector which will not interfere with the user in routine paint-spraying operation and maintenance of the spray gun and on which an air pressure can be read easily and readily when necessary to control the spraying air pressure.

### BACKGROUND ART

The spray gun uses compressed air to atomize a paint for spraying to an object. The pressure of compressed air should always be monitored and controlled to assure a stable quality of painting with the spray gun. There are available some spray guns in which the user can check the spraying air pressure from a near position.
In the spray coating, both the quality of finished coating and scattering of the paint mist greatly depend upon the spraying air pressure used in the air spray gun to spray a paint to an object. Namely, it is well known that a higher air pressure will provide an increased energy for spraying and a finer atomization of the paint, which is generally contributed to an improved quality of paint coating. On the contrary, however, fine atomized mist of a paint is easily influenced by air flow to be more scattered. On this account, it is recommendable to use a spray gun with an appropriate spraying pressure selected correspondingly to a paint, object to be sprayed with the paint and coating conditions. For a quality spray coating, the spray gun should desirably be operated with monitoring the air pressure used for the spraying and under well-controlled conditions. In the recent spray guns, a lower air pressure is used to prevent the spray of paint from scattering and it is important to control the spraying air pressure since even a small change of the air pressure has a great influence on the coating quality. For example, in case objects carried one after another to a painting post are to be coated with paints different in color from each other, the paints have to be atomized under different conditions because of their different properties. In this case, the spraying pressure is changed from one to another of spray guns used with the respective paints in many cases.

The spraying air pressure is adjusted by a pressure reducing valve or the like before supplied to the spray gun via an air hose. Conventionally, the user of the spray gun rarely checks the spraying pressure in the course of a spray coating being made. As mentioned above, however, it is regarded as being very important to adjust the spraying pressure within a range set for assuring the stable quality of coating and thus it is necessary that the spraying pressure can be monitored from a position near the spray gun. Also, to assure a stable quality of the coating, it has been standardized to make a continuous spray coating under an air pressure adjusted to a predetermined range without reliance on the user's skill and intuition. Thus, it is necessary to monitor the air pressure in the course of a spray coating.

Generally, a pressure gauge is installed directly to the spray gun in coating tests to acquire quantitative data. The pressure gauge used in such tests is a general-purpose one, and it is installed to a joint for the air hose of the spray gun. However, since the pressure gauge interferes with the user in the routine spray-coating work because of its weight and size, so it is rarely used in the actual coating.

However, there has been proposed to use a small pressure gauge installed directly to a spray gun and which has no influence on the operability of the spray gun and on which the air pressure can be checked at any time even while the spray gun is being used (cf. Japanese Published Examined Utility Model No. 22277 of 1993). This pressure gauge is an analog pressure gauge of the so-called bourdon tube type, and does not meet the precision and durability requirements because it has to be designed small for installation to a spray gun. The spray gun is normally cleaned with thinner or the like. However, a spray gun with such a pressure gauge should be cleaned with much care being exercised for the pressure gauge not to be applied with the thinner, and cannot be cleaned using any automatic cleaning machine.

Also, to solve the problem of the pressure gauge in the maintenance of the spray gun and accurately indicate a spraying pressure, there has been proposed in the Japanese Published Patent No. 506310 of 1993 a spray gun in which a pressure gauge unit using a pressure sensor is hermetically embedded to provide a digital indication of the air pressure under which a paint is being sprayed. In this example, the pressure gauge unit is battery-operated, and it is housed in an air-tight container. Therefore, the spray gun is expensive, and the battery is a consumable component and thus will be a waste after expiration of its service life. Namely, the spray gun of this type has many practical problems yet to solve.
EP-A-1375013 discloses a retrofittable pressure gauge attached to the body of a spray gun. US Patent 6585173 discloses a pressure gauge with its power supply and display, fitted into the grip of a spray gun.
The invention provides a spray gun as defined in Claim 1.
The present invention can overcome the above-mentioned drawbacks of the related art by providing a spray gun with which aspraying pressure can readily be checked when necessary and the coating work can be standardized.
The present invention can also provide a spray gun manufactured with a reduced cost and which needs no expensive associated facility and can be handled similarly to the conventional spray gun in the routine maintenance.

The present invention can also provide a spray gun designed to easily take the air pressure, thereby permitting to check pressure data and make a predetermined control of the pressure on the basis of the pressure data.
In the spray gun according to the present invention, the pressure measuring device is normally separated from the spray gun, and they are joined to each other when it is necessary to measure the air pressure. Of course, the spray gun may be used with the pressure measuring device kept joined to the spray gun whenever necessary.
The check valve may be embedded in a joint or the like at a grip end of the spray gun. The pressure detecting means may be removably connected to the pressure measuring device by abutting, screwing or fitting as long as a hermetic connection can be achieved between them.

These and other objects, features and advantages of the present invention will become more apparent from the ensuing detailed description of the preferred embodiments of the present invention when taken in conjunction with the accompanying drawings.

### BRIEF DESCRIIPTION OF THE DRAWINGS

FIG. 1 is a schematic sectional view of the spray gun embodying the present invention;
FIG. 2 is also a sectional view of an embodiment of the check valve;
FIG. 3 is a sectional view of another embodiment of the check valve;
FIG. 4 is an external view of the spray gun with the check valve means provided at the joint of the grip; and
FIG. 5 is a sectional view, enlarged in scale, of a portion A in FIG. 4.

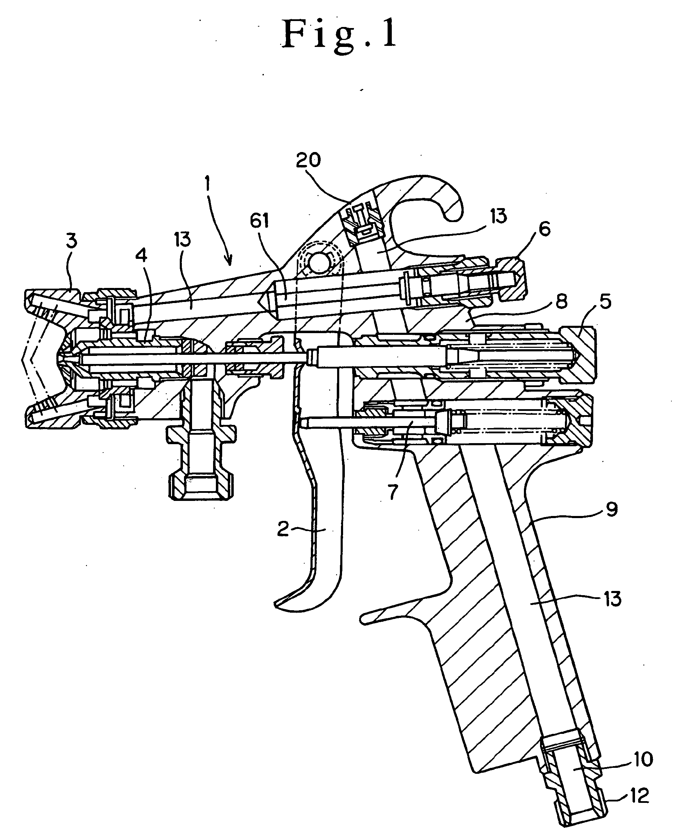

Referring now to FIG. 1, there is schematically illustrated in the form of a sectional view one embodiment of the spray gun according to the present invention. The spray gun, generally indicated with a reference 1, is a manual type one operated with a trigger 2. As shown, the spray gun 1 includes an atomizer formed primarily from an atomization air cap 3 and paint nozzle 4, a gun barrel 8 formed from a paint supply adjuster 5, a pattern adjuster 6 and an air valve 7, and a grip 9 extending backward and downward from the gun barrel 8. The grip 9 has formed at the bottom thereof a connecting joint 12 forming an air intake 10

There is formed an air channel 13 in the gun barrel to connect the air intake 10 and atomizer to each other. There are disposed in a part of the air channel 13 the air valve 7 and a regulating valve 61 of the pattern adjuster 6. According to this embodiment, a check valve 20 is provided between and above the air valve 7 and regulating valve 61. The check valve 20 has a body 21 21 thereof fixed, by screwing tightly, in a spray gun body 11. There is provided a valve 23 engaged on a seat 22 to close the air channel. The valve 23 is always forced from the rear end thereof by an elastic member 24 to abut the seat 22. The valve 23 has formed at the front thereof a rod 26 extending in an opening 25 formed in a body 21 of the valve 23. When the valve rod 26 is pushed in, the valve 23 is opened to take the pressure from inside the air channel 13.

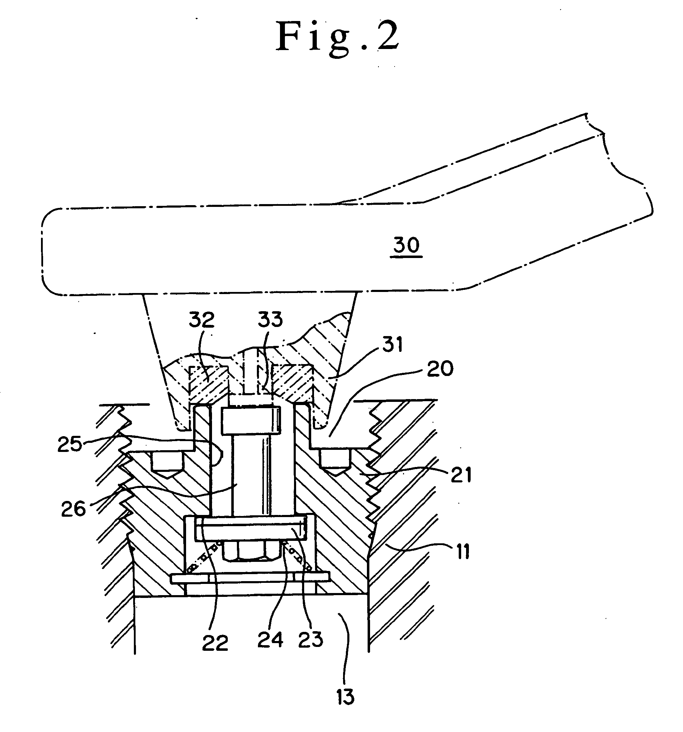

The opening 25 in the valve body 21 and valve rod 26 are determined in shape in relation to a portion, on which they are to be engaged, of a pressure measuring device. FIG. 2 shows an embodiment of the pressure detecting means. In FIG. 2, the pressure measuring device indicated with a reference 30 is indicated with a dashed line. The pressure measuring device 30 is an ordinary digital pressure gauge. It has formed at the free end thereof a measurement opening 31 in which a leakage-preventive packing 32 is fitted. The leakage-preventive packing 32 has provided in the center thereof a tappet 33 to push in the valve rod 26. The packing 32 abuts the end face of the opening 25 in the valve body 21 to keep air-tightness. When the pressure gauge 30 is further pressed until the packing 32 is compressed, the tappet 33 presses the valve rod 26 and thus opens the valve 23 so that the pressure inside the air channel 13 will act on the measurement opening 31 in the pressure gauge 30.

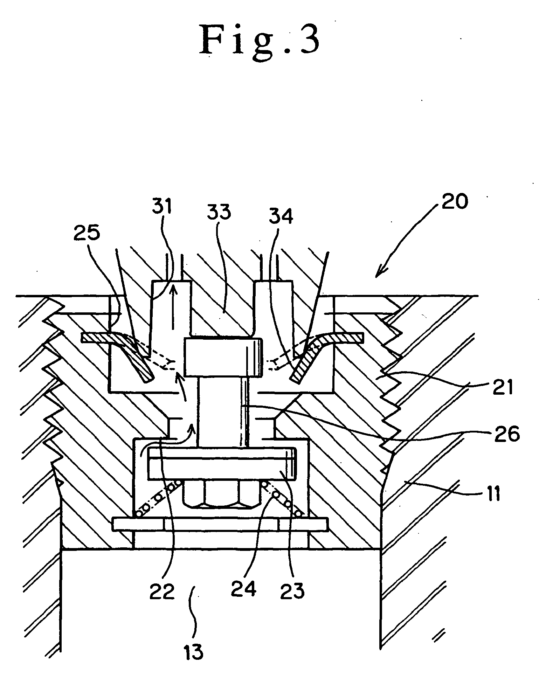

The portions of the pressure gauge 30 and valve body 21, which are engaged on each other, have to be designed to open the valve 23 while moving in close contact with each other. If the contact portion of either the measurement opening 31 in the pressure gauge 30 or the opening 25 in the valve body 21 can have provided thereon a leakage-preventive means formed from any easily deformable material, the engagement portions of the pressure gauge 30 and valve body 21 are not limited to those shown in FIG. 2. FIG. 3 shows an example of such engagement portions in which the leakage-preventive means 34 is provided at the pressure detector 20.
The check valve may be provided in a location where it communicates with a part of the air channel 13 in the spray gun where the pressure has to be measured. Depending upon the location of the check valve 20, there may be provided a separate liaison channel which provides a connection between the check valve 20 and air channel 13, for example. Also, the opening 25 may be provided with a lid to prevent intrusion of a paint or inadvertent opening while the spray gun is being used. Further, to provisionally fix the pressure gauge 30, there may be provided, for example, a removable means for screwing the pressure gauge 30 into the opening 25 in the valve body 21.

As mentioned above, spray coating is effected by the spray gun provided with the pressure gauge 20 for pressure detection, and the air pressure can instantly be detected simply by pressing the pressure gauge 20 when it is necessary to measure and check the air pressure. As mentioned above, different from the conventional spray gun in which the air hose has to be disconnected for the purpose of installing the pressure gauge, it is not necessary in the spray gun according to the present invention to dismount the pressure gauge once installed for the reason that the latter will degrade the operability of the spray gun in spray coating. The spray gun according to the present invention can of course be used as an ordinary spray gun.
Also, since the spray gun has no pressure gauge installed thereon, it can easily be cleaned with a thinner or the like and also cleaned with a thinner sprayed to its entirety in an automatic cleaning facility, both with no problem.

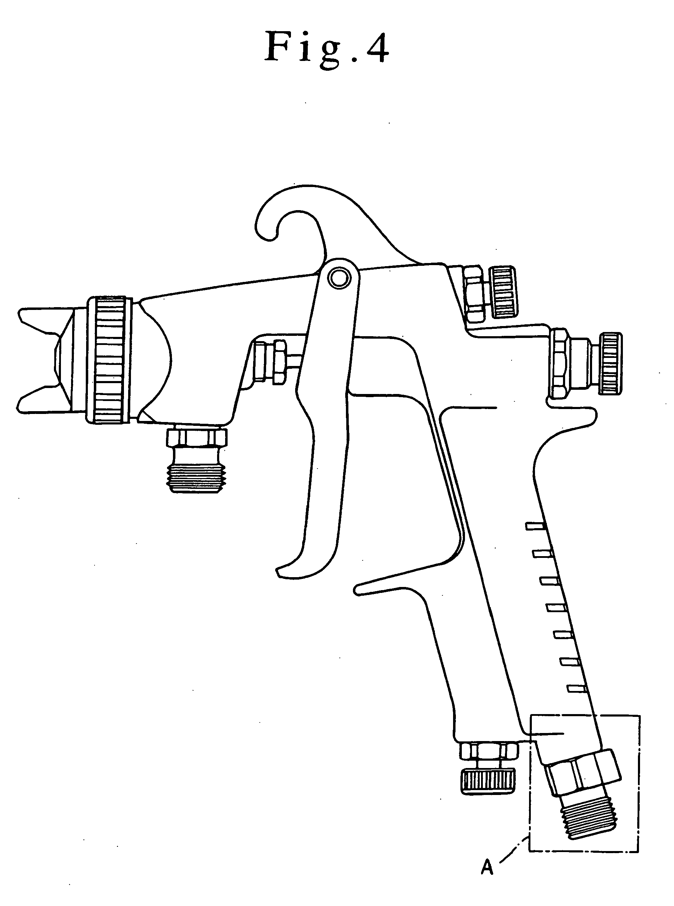

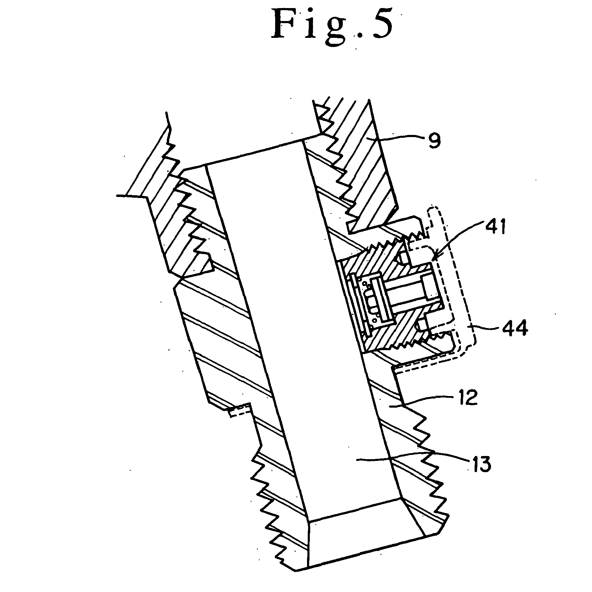

FIGS. 4 and 5 show another embodiment of the present invention in which the spray gun having a pressure detector provided at the joint of the air intake of the spray gun. FIG. 4 is an external view of the spray gun. As shown in detail in the sectional view in FIG. 5, a pressure detector 41 is embedded in the connecting joint 12. The pressure detector 41 may have a similar check valve to that included in the embodiment having been described above with reference to FIG. 2. Although a freely removable cap 44 may be provided as indicated with a chain line in FIG. 5 to prevent direct intrusion of a paint if necessary, the pressure detector 41 should desirably be easy to remove. With the pressure detector 41 being embedded in a part of a fixture connecting to the air channel in the spray gun as in this embodiment, the joint and the like of a conventional spray gun may be replaced with the joint of the spray gun according to the present invention even with no modification of the spray gun body.

According to the present invention, a valve to take out the spraying air pressure in the air channel is attached to the spray gun with the pressure gauge itself not being attached to the spray gun. It is not necessary to provide a pressure sensor, conversion circuit board, pressure indicator or the like on each spray gun. That is, the dedicated pressure measuring device is connected to the spray gun only when it is necessary to check the air pressure in the spray gun.

Further, the pressure measuring device may include a conversion means such as a power unit, control circuit board, for converting a pressure into an electrical signal for digital display, a storage/calculation means for using the pressure data as a control signal, etc. which are isolated from the spray gun itself. Thus, a pressure measuring feature may be included in the pressure measuring device itself without having to take in consideration the possible intrusion and adhesion of paint and solvent and the safety requirements, whereby preset paint spraying conditions can be stored, air pressure can easily be adjusted and the acceptability of an air pressure can be informed by alarming or the like.

### INDUSTRIAL APPLICABILITY

As having been described in the foregoing, the present invention provides a spray gun permitting the user to easily check the spraying pressure as an important factor in the use of the spray gun whenever necessary and control the spraying pressure easily. Further, the present invention is applicable to a spray gun which has an air channel and uses a compressed air to spray a paint independently of the spray gun construction.

According to the present invention, with only a minimum function such as an air pressure detection valve or sensor or the like being provided on the spray gun, the air pressure can readily be measured when necessary. For the air pressure measurement, there is required no large mechanism, and thus the spray gun according to the present invention is highly safe and durable. Also, since the spray gun has not to be used with the pressure measuring device kept installed, a single such device can be used in common with a plurality of spray guns. Namely, many spray guns can be used at low costs.

Further, the pressure measuring device such as the digital pressure gauge can be removed from the spray gun which is used as an ordinary one. Therefore, when the safety, device size and costs may not be taken in consideration, the pressure measuring device may have provided therein a storage unit, control feature and the like to standardize and manage the spray-coating work.
In the foregoing, the present invention has been described in detail concerning certain preferred embodiments thereof as examples with reference to the accompanying drawings. However, it should be understood by those ordinarily skilled in the art that the present invention is not limited to the embodiments but can be modified in various manners, constructed alternatively or embodied in various other forms without departing from the scope thereof as set forth and defined in the appended claims.

## Claims

1. A spray gun (1) including an atomizer (3, 4) to atomize paint with compressed air, an air intake for compressed air from the atomizer, and an air channel (13) which provides a communication between the atomizer and air intake, **characterized in that** there is further provided a check valve (20) facing at one side thereof a part of the air channel and at the other side the outside of the spray gun, the check valve being constructed so that the air pressure in the air channel acts on an external pressure measuring device (30) when the check valve is connected to the pressure measuring device, so that it is opened under pressure applied from outside, so that the air channel is isolated from the outside when the check valve is disconnected from the pressure measuring device, and so that the check valve is closed as the pressure from the pressure measuring device is removed.

2. A spray gun according to Claim 1, wherein the check valve (41) is embedded in a joint (12) which is the air intake (10).

## Patentansprüche

1. Sprühpistole (1) umfassend einen Zerstäuber (3, 4), um Farbe mit Hilfe von Druckluft zu zerstäuben, einen Lufteinlass für die vom Zerstäuber kommende Druckluft, und einen Luftkanal (13), der eine Verbindung zwischen dem Zerstäuber und dem Lufteinlass herstellt, **dadurch gekennzeichnet, dass** ferner ein Rückschlagventil (20) bereitgestellt wird, dessen eine Seite ein Teil des Luftkanals zugewandt ist und dessen anderer Seite das Äußere der Sprühpistole zugewandt ist, wobei das Rückschlagventil so aufgebaut ist, dass der Luftdruck im Luftkanal auf ein äußeres Druckmessgerät (30) einwirkt, wenn das Rückschlagventil mit dem Druckmessgerät verbunden ist, so dass es unter von Außen einwirkendem Druck geöffnet wird, so dass der Luftkanal von Außen isoliert wird, wenn das Rückschlagventil vom Druckmessgerät getrennt wird, und so dass das Rückschlagventil geschlossen wird, wenn der Druck vom Druckmessgerät entfernt wird.

2. Sprühpistole nach Anspruch 1, wobei das Rückschlagventil (41) in ein Verbindungsstück (12), das sich im Lufteinlass (10) befmdet, eingelassen ist.

## Revendications

1. Pistolet de pulvérisation (1) incluant un atomiseur (3, 4) pour atomiser de la peinture à l'aide d'air comprimé, une entrée d'air pour l'air comprimé provenant de l'atomiseur, et un canal d'air (13) fournissant une liaison entre l'atomiseur et l'entrée d'air, **caractérisé par** la fourniture supplémentaire d'un clapet anti-retour (20) faisant face, sur un de ses côtés, à une partie du canal d'air, et sur l'autre côté, à l'extérieur du pistolet de pulvérisation, le clapet anti-retour étant conçu de manière à ce que la pression d'air dans le canal d'air agisse sur un dispositif de mesure de pression extérieur (30) quand le clapet anti-retour est connecté au dispositif de mesure de la pression, de sorte qu'il s'ouvre sous la pression appliquée de l'extérieur, de sorte que le canal d'air est isolé de l'extérieur quand le clapet anti-retour est déconnecté du dispositif de mesure de pression, et de sorte que le clapet anti-retour est fermé lorsque la pression du dispositif de mesure de la pression est supprimée.

2. Pistolet de pulvérisation selon la revendication 1, dans lequel le clapet anti-retour (41) est encastré dans un joint (12) qui est l'entrée d'air (10).
